(19) **Europäisches Patentamt / European Patent Office / Office européen des brevets**

(11) **EP 2 794 480 B1**

(12) **FASCICULE DE BREVET EUROPEEN**

(45) Date de publication et mention de la délivrance du brevet:
**08.04.2020 Bulletin 2020/15**

(21) Numéro de dépôt: **12810248.0**

(22) Date de dépôt: **19.12.2012**

(51) Int Cl.:
**C01B 33/193** *(2006.01)*

(86) Numéro de dépôt international:
**PCT/EP2012/076213**

(87) Numéro de publication internationale:
**WO 2013/092749 (27.06.2013 Gazette 2013/26)**

(54) **PROCÉDÉ DE PRÉPARATION DE SILICES PRÉCIPITÉES**

HERSTELLUNGSVERFAHREN FÜR AUSGEFÄLLTE KIESELSÄURE

PRECIPITATED-SILICA PRODUCTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1104090**

(43) Date de publication de la demande:
**29.10.2014 Bulletin 2014/44**

(73) Titulaire: **Rhodia Opérations**
**75009 Paris (FR)**

(72) Inventeurs:
• **CLOUIN, Malika**
**F-75012 Paris (FR)**
• **NEVEU, Sylvaine**
**F-75005 Paris (FR)**
• **RACINOUX, Joël**
**F-69270 Rochetaillee Sur Saone (FR)**

(74) Mandataire: **Ferri, Isabella et al**
**Solvay S.A.**
**Viale Lombardia, 20**
**20021 Bollate (MI) (IT)**

(56) Documents cités:
**EP-A1- 0 520 862      EP-A1- 0 754 650**
**WO-A1-2010/022544**

**Description**

La présente invention concerne un nouveau procédé de préparation de silice précipitée.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétique(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmissions.

Il est ainsi connu de préparer par certains procédés, mettant en œuvre une réaction de précipitation entre un silicate et un acide dilué, des silices précipitées ayant une bonne aptitude à la dispersion (dispersibilité) dans les compositions de polymères (élastomères) et de bonnes propriétés renforçantes, permettant de procurer auxdites compositions dans lesquelles elles sont incorporées un compromis de propriétés très satisfaisant. Un exemple d'un tel procédé et de telles silices est fourni par EP520862B1.

WO2010/022544A1 décrit un procédé de préparation de silices précipitées dans lequel l'acide utilisé dans la réaction de précipitation est choisi dans le groupe constitue de l'acide sulfurique à hauteur de 90 à 98,5 % en poids, de l'acide chlorhydrique à hauteur de 34 à 42,7 % en poids, de l'acide nitrique à hauteur de 60 à 68 % en poids, de l'acide phosphorique à hauteur de 80 à 100 % en poids, de l'acide carbonique ou du $CO_2$ et du bisulfite de sodium ou du $SO_2$.

Le but principal de la présente invention est de proposer un nouveau procédé de préparation de silice précipitée, utilisable comme charge renforçante dans les compositions de polymère(s) (élastomère(s)), qui constitue une alternative à ces procédés connus de préparation de silice précipitée.

Plus préférentiellement, l'un des buts de la présente invention consiste à fournir un procédé qui, tout en ayant une productivité améliorée, en particulier au niveau de la réaction de précipitation, notamment par rapport à ces procédés de préparation de l'état de la technique mettant en œuvre à titre d'acide un acide dilué, permet d'obtenir des silices précipitées ayant des caractéristiques physicochimiques similaires, de préférence une surface spécifique relativement élevée et des propriétés comparables, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par ces procédés de préparation de l'état de la technique.

Un autre but de l'invention consiste préférentiellement, dans le même temps, à réduire la quantité d'énergie consommée et/ou la quantité d'eau employée lors de la préparation de silice précipitée, notamment par rapport à ces procédés de l'état de la technique.

Dans ces buts, l'objet de l'invention est un nouveau procédé de préparation de silice précipitée, ayant de préférence une bonne aptitude à la dispersion (dispersibilité) dans les compositions de polymères (élastomères) et de bonnes propriétés renforçantes, comprenant la réaction d'un silicate avec au moins un acide ce par quoi l'on obtient une suspension de silice précipitée, puis la séparation et le séchage de cette suspension, dans lequel :

- on réalise la précipitation de la manière suivante :

    (i) on forme un pied de cuve initial comportant au moins une partie de la quantité totale du silicate engagé dans la réaction et un électrolyte, la concentration en silicate (exprimée en $SiO_2$) dans ledit pied de cuve initial étant comprise entre 50 et 70 g/L,

    (ii) on ajoute un acide audit pied de cuve jusqu'à l'obtention d'une valeur du pH du milieu réactionnel comprise entre 7 et 8,5,

    (iii) on ajoute au milieu réactionnel de l'acide et, le cas échéant, simultanément la quantité restante du silicate,

    (iv) on ajoute au milieu réactionnel un acide, de préférence jusqu'à l'obtention d'une valeur du pH du milieu réactionnel comprise entre 4 et 6, en particulier entre 4 et 5,5,

- la séparation comprend une filtration et un lavage au moyen d'un filtre équipé d'un moyen de compactage,
- on sèche par atomisation une suspension, de préférence présentant un taux de matière sèche inférieure d'au plus 22 % en masse,

procédé dans lequel dans au moins l'étape (iii) l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse, et dans lequel dans l'étape (ii) l'acide utilisé après l'atteinte du point de gel dans le milieu réactionnel est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, ledit acide concentré est de l'acide sulfurique concentré, c'est-à-dire de l'acide sulfurique présentant une concentration d'au moins 80 % en masse, de préférence d'au moins 90 % en masse.

On peut ainsi utiliser, comme acide concentré, de l'acide sulfurique ayant une concentration d'au moins 1400 g/L, en particulier d'au moins 1650 g/L.

Ainsi, selon l'une des caractéristiques essentielles de l'invention, prise en combinaison avec un enchaînement d'étapes aux conditions spécifiques, en particulier une certaine concentration en silicate et en électrolyte dans le pied de cuve initial ainsi que, de préférence, un taux approprié de matière sèche de la suspension à sécher, l'acide utilisé dans la totalité de l'étape (iii) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, ledit acide concentré est de l'acide sulfurique concentré, c'est-à-dire de l'acide sulfurique présentant une concentration d'au moins 80 % en masse (et en général d'au plus 98 % en masse), de préférence d'au moins 90 % en masse ; en particulier, sa concentration est comprise entre 90 et 98 % en masse, par exemple entre 91 et 97 % en masse.

L'acide utilisé dans une partie de l'étape (ii) et dans l'étape (iv) peut alors être par exemple un acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 % en masse), en particulier inférieure à 14 % en masse, notamment d'au plus 10 % en masse, par exemple comprise entre 5 et 10 % en masse.

Cependant, selon une variante très préférée de l'invention, l'acide utilisé dans l'étape (iv) est également un acide concentré tel que mentionné ci-dessus. Dans une partie de l'étape (ii), en général dans une deuxième et dernière partie de cette étape (ii), l'acide utilisé est également un acide concentré tel que mentionné ci-dessus (l'acide utilisé dans l'autre partie de l'étape (ii) étant par exemple un acide dilué comme décrit ci-dessus).

Ainsi, dans cette étape (ii) l'acide employé jusqu'à ce qu'on atteigne le point de gel dans le milieu réactionnel (correspondant à une brusque augmentation de la turbidité du milieu réactionnel caractéristique d'une augmentation de taille des objets) peut être un acide dilué tel que mentionné ci-dessus, de manière avantageuse de l'acide sulfurique dilué (c'est-à-dire présentant une concentration très inférieure à 80 % en masse, en l'occurrence une concentration inférieure à 20 % en masse, en général inférieure à 14 % en masse, en particulier d'au plus 10 % en masse, par exemple comprise entre 5 et 10 % en masse) et l'acide employé après atteinte du point de gel dans le milieu réactionnel peut être un acide concentré tel que mentionné ci-dessus, de manière avantageuse de l'acide sulfurique concentré, c'est-à-dire de l'acide sulfurique présentant une concentration d'au moins 80 % en masse, de préférence d'au moins 90 % en masse, en particulier comprise entre 90 et 98 % en masse.

De même, dans cette étape (ii), l'acide employé dans les x premières minutes de l'étape (ii), avec x compris entre 15 et 25, par exemple égal à 20, peut être un acide dilué tel que mentionné ci-dessus et l'acide employé après les x premières minutes de l'étape (ii), avec x compris entre 15 et 25, par exemple égal à 20, peut être un acide concentré tel que mentionné ci-dessus.

Dans le cadre de cette variante très préférée de l'invention, l'acide utilisé dans la totalité de l'étape (ii) peut également être un acide concentré tel que mentionné ci-dessus, de manière avantageuse de l'acide sulfurique concentré, c'est-à-dire présentant une concentration d'au moins 80 % en masse, de préférence d'au moins 90 % en masse, en particulier comprise entre 90 et 98 % en masse. De préférence, dans le cas de cette utilisation, on ajoute de l'eau dans le pied de cuve initial, en particulier soit avant l'étape (ii) soit au cours de l'étape (ii).

Il est à noter, d'une manière générale, que le procédé concerné est un procédé de synthèse de silice de précipitation, c'est-à-dire que l'on fait agir, dans des conditions particulières, un acide sur un silicate.

Dans le procédé selon l'invention, on utilise généralement comme acide(s) (acide concentré ou acide dilué) un acide organique tel que l'acide acétique, l'acide formique ou l'acide carbonique ou, de préférence, un acide minéral tel que l'acide sulfurique, l'acide nitrique, l'acide phosphorique ou l'acide chlorhydrique.

Si on utilise comme acide concentré de l'acide acétique concentré ou de l'acide formique concentré, alors leur concentration est d'au moins 90 % en masse.

Si on utilise comme acide concentré de l'acide nitrique concentré, alors sa concentration est d'au moins 60 % en masse.

Si on utilise comme acide concentré de l'acide phosphorique concentré, alors sa concentration est d'au moins 75 % en masse.

Si on utilise comme acide concentré de l'acide chlorhydrique concentré, alors sa concentration est d'au moins 30 % en masse.

Cependant, de manière très avantageuse, on emploie comme acide(s) un (des) acide(s) sulfurique(s), l'acide sulfurique concentré alors utilisé présentant une concentration telle que déjà mentionnée dans l'exposé ci-dessus.

En général, lorsque de l'acide concentré est utilisé dans plusieurs étapes, on emploie alors le même acide concentré.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/L, par exemple entre 60 et 300 g/L, en particulier entre 60 et 250 g/L.

De manière générale, on emploie, comme silicate, le silicate de sodium.

Dans le cas où l'on utilise le silicate de sodium, celui-ci présente, en général, un rapport pondéral $SiO_2/Na_2O$ compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Selon une caractéristique du procédé de préparation de l'invention, la concentration en silicate dans le pied de cuve initial, exprimée en équivalent $SiO_2$, est comprise entre 50 et 70 g/L (par exemple antre 55 et 65 g/L). De préférence, cette concentration est comprise entre 50 et 65 g/L, en particulier comprise entre 50 et 60 g/L.

Le pied de cuve initial comprend un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Si l'électrolyte employé est du sulfate de sodium, sa concentration dans le pied de cuve initial est comprise, de préférence, entre 12 et 20 g/L, en particulier entre 13 et 18 g/L.

La deuxième étape consiste à ajouter de l'acide dans le pied de cuve de composition décrite plus haut (étape (ii)).

Cette addition qui entraîne une baisse corrélative du pH du milieu réactionnel se fait jusqu'à ce qu'on atteigne une valeur du pH comprise entre 7 et 8,5 ; notamment entre 7 et 8, par exemple entre 7,5 et 8.

Une fois qu'est atteinte la valeur souhaitée de pH, on procède alors, dans l'étape (iii), à l'addition simultanée d'acide et de silicate.

Cette addition simultanée est de préférence réalisée de manière telle que la valeur du pH soit constamment égale (à +/- 0,2 près) à celle atteinte à l'issue de l'étape (ii).

Il peut être procédé à l'issue de l'étape (iv) à un mûrissement du milieu réactionnel (suspension aqueuse) obtenu, ce mûrissement pouvant par exemple durer de 1 à 30 minutes, notamment de 2 à 15 minutes.

La température du milieu réactionnel est généralement comprise entre 68 et 98 °C.

Selon une variante de l'invention, la réaction est effectuée à une température constante, de préférence comprise entre 75 et 95 °C.

Selon une autre variante (préférée) de l'invention, que l'étape (ii) soit effectuée (en totalité ou en partie) ou ne soit pas effectuée avec de l'acide concentré, la température de fin de réaction est plus élevée que la température de début de réaction : ainsi, on maintient la température au début de la réaction (par exemple au cours de l'étape (i) et d'une partie de l'étape (ii)) de préférence entre 68 et 85 °C, puis on augmente la température, de préférence jusqu'à une valeur comprise entre 85 et 98 °C, valeur à laquelle elle est maintenue (par exemple au cours d'une partie de l'étape (ii) et au cours des étapes (ii) et (iii)) jusqu'à la fin de la réaction.

Selon un autre mode de réalisation de l'invention, par exemple (mais pas uniquement) lorsqu'une partie de l'étape (ii) n'est pas effectuée avec de l'acide concentré, l'ensemble des étapes (i) à (iv) peut être effectué à une température constante.

Dans le procédé selon l'invention, on obtient, à l'issue de l'étape (iv), éventuellement suivie d'un mûrissement, une bouillie de silice qui est ensuite séparée (séparation liquide-solide).

Selon une autre caractéristique essentielle du procédé de préparation de l'invention, ladite séparation comprend une filtration et un lavage à l'aide d'un filtre équipé d'un moyen de compactage, la pression de compactage étant de préférence relativement faible.

Ce filtre peut être un filtre à bande équipé d'un rouleau assurant le compactage.

Néanmoins, de préférence, la séparation comprend une filtration, un lavage puis un compactage, au moyen d'un filtre presse ; en général, la pression en fin de filtration est comprise entre 3,5 et 6,0 bars, la durée de compactage étant par exemple d'au moins 20 secondes, notamment d'au moins 80 secondes.

La suspension de silice précipitée ainsi récupérée (gâteau de filtration) est ensuite séchée par atomisation.

Dans le procédé de préparation de l'invention, cette suspension peut présenter immédiatement avant son séchage par atomisation un taux de matière sèche d'au plus 22 % en masse. Ce taux de matière sèche est de préférence d'au plus 20 % en masse. Il peut être inférieur à 17 % en masse.

Il est à noter que l'on peut en outre, après la filtration, à une étape ultérieure du procédé, rajouter au gâteau de filtration de la matière sèche, par exemple de la silice conforme à l'invention sous forme pulvérulente.

Le séchage peut être mis en œuvre au moyen de tout type d'atomiseur convenable, notamment un atomiseur à turbine, à buses, à pression liquide ou à deux fluides.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée par passage du gâteau dans un broyeur de type colloïdal ou à billes. Le délitage est généralement effectué en présence d'un composé de l'aluminium, en particulier d'aluminate de sodium et, de préférence, en présence d'un acide tel que décrit précédemment (dans ce dernier cas, le composé de l'aluminium et l'acide sont avantageusement ajoutés de manière simultanée). L'opération de délitage permet notamment d'abaisser la viscosité de la suspension à sécher ultérieurement.

Selon un mode préféré de réalisation de l'invention, le séchage est effectué à l'aide d'un atomiseur à buses. La silice précipitée susceptible d'être alors obtenue se présente avantageusement sous forme de billes.

A l'issue du séchage, on peut procéder à une étape de broyage sur le produit récupéré. La silice précipitée qui est alors susceptible d'être obtenue se présente généralement sous forme d'une poudre.

De même, selon un autre mode de réalisation de l'invention, le séchage est effectué à l'aide d'un atomiseur à turbine. La silice précipitée susceptible d'être alors obtenue peut se présenter sous la forme d'une poudre.

Enfin, le produit séché (notamment par un atomiseur à turbines) ou broyé tel qu'indiqué précédemment peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en œuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés.

La mise en œuvre du procédé de préparation selon l'invention, particulièrement lorsque l'acide concentré utilisé est de l'acide sulfurique concentré, permet notamment d'obtenir au cours dudit procédé (à l'issue de l'étape (iv)) une suspension plus concentrée en silice précipitée que celle obtenue par un procédé identique utilisant uniquement de l'acide dilué, et donc un gain en productivité en silice précipitée (pouvant atteindre par exemple au moins 10 à 40 %) en particulier à la réaction de précipitation (c'est-à-dire à l'issue de l'étape (iv)), tout en s'accompagnant de manière surprenante de l'obtention de silice précipitée ayant une bonne aptitude à la dispersion (dispersiblité) dans les compositions de polymère(s) (élastomère(s)) ; de manière plus générale, les silices précipitées obtenues par le procédé selon l'invention présentent préférentiellement des caractéristiques physicochimiques et des propriétés comparables, notamment au niveau de leur distribution poreuse, de leur aptitude à la désagglomération et à la dispersion (dispersibilité) dans les compositions de polymère(s) (élastomère(s)) et/ou de leurs propriétés renforçantes, à celles des silices précipitées obtenues par un procédé identique utilisant uniquement de l'acide dilué.

De manière avantageuse, dans le même temps, notamment lorsque l'acide concentré utilisé est de l'acide sulfurique concentré, le procédé selon l'invention permet, par rapport à un procédé identique employant uniquement de l'acide dilué, un gain (pouvant atteindre par exemple au moins 15 à 60 %) sur la consommation d'énergie (sous forme de vapeur vive par exemple), en particulier à la réaction de précipitation (c'est-à-dire à l'issue de l'étape (iv)), du fait d'une diminution des quantités d'eau engagées et de l'exo-thermicité liée à l'utilisation d'acide concentré. En outre, l'utilisation d'acide concentré permet de restreindre (par exemple d'au moins 15 %) la quantité d'eau nécessaire à la réaction, notamment du fait de la diminution de la quantité d'eau utilisée pour la préparation de l'acide.

La silice précipitée obtenue par le procédé selon l'invention présente, de manière avantageuse, à la fois une surface spécifique élevée et une aptitude à la dispersion (dispersibilité) satisfaisante et de bonnes propriétés renforçantes, en particulier lors de son utilisation à titre de charge renforçante pour élastomères, conférant à ces derniers de bonnes propriétés rhéologiques et mécaniques.

La silice précipitée obtenue par le procédé selon l'invention présente généralement les caractéristiques suivantes :

- une surface spécifique BET ($S_{BET}$) comprise entre 180 et 260 m$^2$/g,
- une surface spécifique CTAB ($S_{CTAB}$) comprise entre 175 et 250 m$^2$/g,
- une distribution poreuse telle que le volume poreux constitué par les pores dont le diamètre est compris entre 175 et 275 Å représente moins de 55 % du volume poreux constitué par les pores de diamètres inférieurs ou égaux à 400 Å,
- un volume poreux ($V_{d1}$) constitué par les pores de diamètre inférieur à 1 $\mu$m d'au moins 1,50 cm$^3$/g.

La silice précipitée préparée par le procédé selon l'invention possède de préférence une surface spécifique BET comprise entre 185 et 250 m$^2$/g.

De manière très préférée, sa surface spécifique BET est comprise entre 185 et 215 m$^2$/g, en particulier entre 190 et 205 m$^2$/g.

De même, de préférence, la silice précipitée préparée par le procédé selon l'invention possède une surface spécifique CTAB comprise entre 180 et 240 m$^2$/g.

De manière très préférée, sa surface spécifique CTAB est comprise entre 185 et 210 m$^2$/g, en particulier entre 190 et 200 m$^2$/g.

La surface spécifique CTAB est la surface externe, pouvant être déterminée selon la méthode NF T 45007 (novembre 1987). La surface spécifique BET peut être mesurée selon la méthode de BRUNAUER - EMMETT - TELLER décrite dans "The Journal of the American Chemical Society", vol. 60, page 309 (1938) et correspondant à la norme NF T 45007 (novembre 1987).

Une des caractéristiques de la silice précipitée obtenue par le procédé selon l'invention réside dans la distribution, ou répartition, de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères.

Ainsi, la silice précipitée obtenue par le procédé selon l'invention possède une distribution poreuse telle que le volume poreux généré par les pores dont le diamètre est compris entre 175 et 275 Å (V2) représente moins de 55 %, en particulier moins de 50 %, par exemple 25 et 45 %, du volume poreux généré par les pores de diamètres inférieurs ou égaux à 400 Å (V1).

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm (norme DIN 66133).

En outre, une autre caractéristique de la silice précipitée obtenue par le procédé selon l'invention réside dans le fait qu'elle possède un volume poreux ($V_{d1}$), constitué par les pores de diamètre inférieur à 1 $\mu$m, supérieur à 1,50 cm$^3$/g, de préférence supérieur à 1,65 cm$^3$/g ; ce volume poreux peut être supérieur à 1,70 cm$^3$/g, par exemple compris entre 1,75 et 1,80 cm$^3$/g.

L'aptitude à la dispersion (et à la désagglomération) de la silice précipitée obtenue par le procédé selon l'invention peut être appréciée au moyen du test suivant, par une mesure granulométrique (par diffraction laser) effectuée sur une suspension de silice préalablement désagglomérée par ultra-sonification (rupture des objets de 0,1 à quelques dizaines de microns). La désagglomération sous ultra-sons est effectuée à l'aide d'un sonificateur VIBRACELL BIOBLOCK (750 W), équipé d'une sonde de diamètre 19 mm. La mesure granulométrique est effectuée par diffraction laser sur un granulomère SYMPATEC, en mettant en œuvre la théorie de Fraunhofer.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on la met en action pendant 5 minutes et 30 secondes à 80 % de sa puissance nominale (amplitude). On réalise ensuite la mesure granulométrique en introduisant dans la cuve du granulomètre un volume V (exprimé en ml) de la suspension homogénéisée nécessaire pour obtenir une densité optique d'environ 20.

La valeur du diamètre médian $\varnothing_{50}$ que l'on obtient selon ce test est d'autant plus faible que la silice présente une aptitude à la désagglomération élevée.

Un facteur de désagglomération $F_D$ est donné par l'équation :

$$F_D = 10 \times V \,/\, \text{densité optique de la suspension mesurée par le granulomètre}$$

(cette densité optique est d'environ 20).

Ce facteur de désagglomération $F_D$ est indicatif du taux de particules de taille inférieure à 0,1 $\mu$m qui ne sont pas détectées par le granulomètre. Ce facteur est d'autant plus élevé que la silice présente une aptitude à la désagglomération élevée.

En général, la silice précipitée obtenue par le procédé selon l'invention possède un diamètre médian $\emptyset_{50}$, après désagglomération aux ultra-sons, inférieur à 8,5 $\mu$m, par exemple compris entre 4 et 8 $\mu$m.

Elle présente habituellement un facteur de désagglomération aux ultra-sons $F_D$ supérieur à 5,5 ml, en particulier supérieur à 9 ml, par exemple supérieur à 10 ml.

De préférence, la silice précipitée obtenue par le procédé selon l'invention possède un taux de fines ($\tau$f), après désagglomération aux ultra-sons, d'au moins 50 %, par exemple d'au moins 55 %.

La mesure du taux de fines ($\tau$f), c'est-à-dire de la proportion (en poids) de particules de taille inférieure à 0,3 $\mu$m, après désagglomération aux ultra-sons, est effectuée selon le test décrit ci-après, et illustre également l'aptitude à la dispersion de la silice précipitée utilisée dans l'invention.

Dans ce test, on mesure l'aptitude à la dispersion de la silice par une mesure granulométrique (par sédimentation), effectuée sur une suspension de silice préalablement désagglomérée par ultra-sonification. La désagglomération (ou dispersion) sous ultra-sons est mise en œuvre à l'aide d'un sonificateur VIBRACELL BIOBLOCK (600 W), équipé d'une sonde de diamètre 19 mm. La mesure granulométrique est effectuée à l'aide d'un granulomètre SEDIGRAPH (sédimentation dans le champ de gravité + balayage par faisceau de rayons X).

On pèse dans un pilulier (de volume égal à 75 ml) 4 grammes de silice et l'on complète à 50 grammes par ajout d'eau permutée : on réalise ainsi une suspension aqueuse à 8 % de silice qui est homogénéisée pendant 2 minutes par agitation magnétique. On procède ensuite à la désagglomération (dispersion) sous ultra-sons comme suit : la sonde étant immergée sur une longueur de 4 cm, on règle la puissance de sortie de manière à obtenir une déviation de l'aiguille de puissance indiquant 20 %. La désagglomération est effectuée pendant 210 secondes. On réalise ensuite la mesure granulométrique au moyen d'un granulomètre SEDIGRAPH. Pour cela, on règle tout d'abord la vitesse de balayage vertical de la cellule par le faisceau de rayons X à 918, ce qui correspond à une taille maximale analysée de 85 $\mu$m. On fait circuler de l'eau permutée dans ladite cellule, puis on règle le zéro électrique et le zéro mécanique de l'enregistreur papier (ce réglage se faisant avec le potentiomètre "100 %" de l'enregistreur à la sensibilité maximale). Le crayon de l'enregistreur papier est placé au point représentant la taille de départ de 85 $\mu$m. On fait ensuite circuler la suspension de silice désagglomérée, éventuellement refroidie au préalable, dans la cellule du granulomètre SEDIGRAPH (l'analyse granulométrique s'effectuant à 30 °C) et l'analyse démarre alors. L'analyse s'arrête automatiquement dès que la taille de 0,3 $\mu$m est atteinte (environ 45 minutes). On calcule alors le taux de fines ($\tau$f), c'est-à-dire la proportion (en poids) de particules de taille inférieure à 0,3 $\mu$m.

Ce taux de fines ($\tau$f), ou taux de particules de taille inférieure à 0,3 $\mu$m, est d'autant plus élevé que la silice présente une dispersibilité élevée.

La silice précipitée obtenue par le procédé selon l'invention peut posséder un indice de finesse (I.F.) compris entre 70 et 100 Å, en particulier entre 80 et 100 Å.

L'indice de finesse (I.F.) représente le rayon médian des pores intra-agrégats, c'est-à-dire le rayon des pores auquel correspond la surface de pores $S_0/2$ mesurée par porosimétrie au mercure ($S_0$ est la surface apportée par tous les pores dont le diamètre est supérieur ou égal à 100 Å).

La silice précipitée obtenue par le procédé selon l'invention peut posséder une densité de remplissage à l'état tassé (DRT), en général, supérieure à 0,26, en particulier à 0,28 ; elle est par exemple au moins égale à 0,30.

La densité de remplissage à l'état tassé (DRT) est mesurée selon la norme NF T 30-042.

Le pH de la silice précipitée utilisée selon l'invention est généralement compris entre 6,0 et 7,5.

Le pH est mesuré selon la méthode suivante dérivant de la norme ISO 787/9 (pH d'une suspension à 5 % dans l'eau) :

Appareillage :

- pHmètre étalonné (précision de lecture au 1/100e)
- électrode de verre combinée
- bécher de 200 ml
- éprouvette de 100 ml
- balance de précision à 0,01 gramme près.

Mode opératoire :

5 grammes de silice sont pesés à 0,01 gramme près dans le bécher de 200 ml. 95 ml d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

La silice précipitée obtenue par le procédé selon l'invention peut se présenter sous forme de poudre de taille moyenne d'au moins 3 $\mu$m, en particulier d'au moins 10 $\mu$m, de préférence d'au moins 15 $\mu$m. Celle-ci est par exemple comprise entre 15 et 60 $\mu$m.

Elle peut se présenter sous forme de granulés (en général de forme sensiblement parallélépipédique) de taille d'au moins 1 mm, par exemple comprise entre 1 et 10 mm, notamment selon l'axe de leur plus grande dimension (longueur).

Elle peut, de préférence, se présenter sous forme de billes sensiblement sphériques de taille moyenne d'au moins 80 $\mu$m, de préférence d'au moins 150 $\mu$m, en particulier comprise entre 150 et 300 $\mu$m, par exemple comprise entre 150 et 270 $\mu$m ; cette taille moyenne est déterminée selon la norme NF X 11507 (décembre 1970) par tamisage à sec et détermination du diamètre correspondant à un refus cumulé de 50 %.

La silice préparée par le procédé selon l'invention peut être utilisée dans de nombreuses applications.

Elle peut être employée par exemple comme support de catalyseur, comme absorbant de matières actives (en particulier support de liquides, notamment utilisées dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elle trouve une application particulièrement intéressante dans le renforcement des polymères, naturels ou synthétiques.

Les compositions de polymère(s) dans lesquelles elle peut être employée, notamment à titre de charge renforçante, sont en général à base d'un ou plusieurs polymères ou copolymères, en particulier d'un ou plusieurs élastomères, présentant, de préférence, au moins une température de transition vitreuse comprise entre -150 et +300 °C, par exemple entre -150 et +20 °C.

A titre de polymères possibles, on peut mentionner notamment les polymères diéniques, en particulier les élastomères diéniques.

On peut citer, comme exemples non limitatifs d'articles finis à base desdites compositions de polymère(s), les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les bandes de convoyeur, les courroies de transmissions.

Les exemples suivants illustrent l'invention sans toutefois en limiter la portée.

EXEMPLE 1 (comparatif)

Dans un réacteur en acier inoxydable muni d'un système d'agitation par hélices et d'un chauffage par vapeur vive dans le milieu réactionnel, on introduit :

- 869 litres d'eau,
- 16,5 kg de $Na_2SO_4$ (électrolyte),
- 302 litres de silicate de sodium aqueux, présentant un rapport pondéral $SiO_2/Na_2O$ égal à 3,46 et une densité à 20 °C égale à 1,236.

La concentration en silicate (exprimée en $SiO_2$) dans le pied de cuve est alors de 64 g/L. Le mélange est porté à une température de 82 °C tout en le maintenant sous agitation.

On y introduit alors 348 litres d'acide sulfurique dilué de densité à 20 °C égale à 1,053 (acide sulfurique de concentration massique égale à 8,1 %). L'acide dilué est introduit à un débit de 522 L/h pendant 40 minutes jusqu'à ce que le pH du milieu réactionnel atteigne une valeur (mesurée à sa température) égale à 8,0.

La température de réaction est de 82 °C pendant les 27 premières minutes de la réaction ; elle est ensuite portée de 82 °C à 90 °C en 13 minutes environ, puis maintenue à 90°C jusqu'à la fin de la réaction.

On introduit ensuite conjointement dans le milieu réactionnel 94 litres de silicate de sodium aqueux du type décrit ci-avant et 120 litres d'acide sulfurique, également du type ci-avant, cette introduction simultanée d'acide dilué et de silicate étant réalisée de manière telle que le pH du milieu réactionnel, pendant cette période d'introduction, soit constamment égal à 8,0 $\pm$ 0,1.

Après introduction de la totalité du silicate, on continue à introduire l'acide dilué, à un débit de 298 L/h, et ceci pendant 8 minutes.

Cette introduction complémentaire d'acide amène alors le pH du milieu réactionnel à une valeur égale à 4,4.

La durée totale de la réaction est de 88 minutes.

On obtient ainsi une bouillie de silice précipitée qui est filtrée et lavée au moyen d'un filtre presse de telle sorte qu'on récupère finalement un gâteau de silice dont l'humidité est de 82% (donc un taux de matière sèche de 18 % en masse). Ce gâteau est ensuite fluidifié par action mécanique et chimique (ajout d'une quantité d'aluminate de sodium correspondant à un rapport pondéral $Al/SiO_2$ de 0,32 %). Après cette opération de délitage, on obtient un gâteau pompable, de pH égal à 6,7, qui est alors atomisé au moyen d'un atomiseur à buses.

Les caractéristiques de la silice obtenue (sous forme de billes sensiblement sphériques) sont les suivantes :

| Surface BET ($m^2$/g) | 201 |
|---|---|
| Surface CTAB ($m^2$/g) | 199 |
| $Ø_{50}$ ($\mu$m) * | 6,1 |
| $F_D$ (ml) * | 16,4 |
| V2/V1 (%) | 29,2 |
| IF (Å) | 98 |
| $V_{d1<1\mu m}$ (ml/g) | 1,72 |
| * : après désagglomération aux ultra-sons | |

## EXEMPLE 2

Dans un réacteur en acier inoxydable muni d'un système d'agitation par hélices et d'un chauffage par vapeur vive dans le milieu réactionnel, on introduit :

- 1040 litres d'eau,
- 19,7 kg de $Na_2SO_4$ (électrolyte),
- 365 litres de silicate de sodium aqueux, présentant un rapport pondéral $SiO_2/Na_2O$ égal à 3,46 et une densité à 20 °C égale à 1,236.

La concentration en silicate (exprimée en $SiO_2$) dans le pied de cuve est alors de 64 g/L. Le mélange est porté à une température de 82 °C tout en le maintenant sous agitation.

On y introduit alors 210 litres d'acide sulfurique dilué de densité à 20 °C égale à 1,053 (acide sulfurique de concentration massique égale à 8,1 %) pendant les 20 premières minutes de la réaction, puis 11 litres d'acide sulfurique concentré de densité à 20 °C égale à 1,83 (acide sulfurique de concentration massique égale à 94 %) jusqu'à ce que le pH du milieu réactionnel atteigne une valeur (mesurée à sa température) égale à 8,0.

La température de réaction est de 82 °C pendant les 20 premières minutes de la réaction ; elle est ensuite portée de 82 °C à 90 °C en 13 minutes environ, puis maintenue à 90 °C jusqu'à la fin de la réaction.

On introduit ensuite conjointement dans le milieu de réaction 107 litres de silicate de sodium aqueux du type décrit ci-avant et 6,9 litres d'acide sulfurique concentré, du type décrit ci-avant, cette introduction simultanée d'acide concentré et de silicate étant réalisée de manière telle que le pH du milieu réactionnel, pendant cette période d'introduction, soit constamment égal à 8,0 ± 0,1.

Après introduction de la totalité du silicate, on continue à introduire l'acide concentré, à un débit de 18,9 L/h, et ceci pendant 8 minutes.

Cette introduction complémentaire d'acide amène alors le pH du milieu à une valeur égale à 4,3.

La durée totale de la réaction est de 88 minutes.

Par rapport à l'exemple 1, on constate :

- un gain en productivité à la réaction (concernant la concentration finale exprimée en $SiO_2$ du milieu réactionnel) de 20 %,
- un gain en consommation d'eau à la réaction de 17 %,
- un gain en consommation d'énergie (sous forme de vapeur vive) à la réaction de 16 %.

On obtient ainsi une bouillie de silice précipitée qui est filtrée et lavée au moyen d'un filtre presse de telle sorte qu'on récupère finalement un gâteau de silice dont l'humidité est de 84 % (donc un taux de matière sèche de 16 % en masse). Ce gâteau est ensuite fluidifié par action mécanique et chimique (ajout d'une quantité d'aluminate de sodium correspondant à un rapport pondéral Al/SiO$_2$ de 0,33 %). Après cette opération de délitage, on obtient un gâteau pompable, de pH égal à 6,2, qui est alors atomisé au moyen d'un atomiseur à buses.

Les caractéristiques de la silice obtenue (sous forme de billes sensiblement sphériques) sont les suivantes :

| | |
|---|---|
| Surface BET (m$^2$/g) | 209 |
| Surface CTAB (m$^2$/g) | 201 |
| $\emptyset_{50}$ ($\mu$m) * | 4,4 |
| $F_D$ (ml) * | 21,4 |
| V2/V1 (%) | 22,4 |
| IF (Å) | 94 |
| $V_{d1<1\mu m}$ (ml/g) | 1,74 |
| * : après désagglomération aux ultra-sons | |

## Revendications

**1.** Procédé de préparation de silice précipitée du type comprenant la réaction d'un silicate avec au moins un acide ce par quoi l'on obtient une suspension de silice précipitée, puis la séparation et le séchage de cette suspension, dans lequel :

- on réalise la précipitation de la manière suivante :

(i) on forme un pied de cuve initial comportant au moins une partie de la quantité totale du silicate engagé dans la réaction et un électrolyte, la concentration en silicate (exprimée en SiO$_2$) dans ledit pied de cuve initial étant comprise entre 50 et 70 g/L,
(ii) on ajoute un acide audit pied de cuve jusqu'à l'obtention d'une valeur du pH du milieu réactionnel comprise entre 7 et 8,5,
(iii) on ajoute au milieu réactionnel de l'acide et, le cas échéant, simultanément la quantité restante du silicate,
(iv) on ajoute au milieu réactionnel un acide, en particulier jusqu'à l'obtention d'une valeur du pH du milieu réactionnel comprise entre 4 et 6,

- la séparation comprend une filtration et un lavage à l'aide d'un filtre équipé d'un moyen de compactage,
- on sèche par atomisation une suspension, de préférence présentant un taux de matière sèche d'au plus 22 % en masse,

procédé dans lequel dans au moins l'étape (iii) l'acide utilisé est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse, et dans lequel dans l'étape (ii) l'acide utilisé après l'atteinte du point de gel dans le milieu réactionnel est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

**2.** Procédé de préparation de silice précipitée selon la revendication 1 **caractérisé en ce que** dans l'étape (iii) on ajoute au milieu réactionnel simultanément un acide et un silicate.

**3.** Procédé selon l'une des revendications 1 et 2, **caractérisé en ce que** l'acide utilisé dans les étapes (iii) et (iv) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

4. Procédé selon la revendication 3, **caractérisé en ce que** l'acide utilisé dans l'étape (ii) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

5. Procédé selon l'une des revendications 1 à 4, **caractérisé en ce que** ledit acide concentré est de l'acide sulfurique présentant une concentration d'au moins 80 % en masse, de préférence d'au moins 90 % en masse.

6. Procédé selon l'une des revendications 1 à 5, **caractérisé en ce que** ledit acide concentré est de l'acide sulfurique présentant une concentration comprise entre 90 et 98 % en masse.

7. Procédé selon l'une des revendications 1 à 6, **caractérisé en ce que** ladite concentration en silicate (exprimée en $SiO_2$) dans ledit pied de cuve est comprise entre 50 et 65 g/L.

8. Procédé selon l'une des revendications 1 à 7, **caractérisé en ce que** ledit électrolyte est du sulfate de sodium, sa concentration dans le pied de cuve initial étant comprise entre 12 et 20 g/L.

9. Procédé selon l'une des revendications 1 à 8, **caractérisé en ce que** ledit séchage est effectué au moyen d'un atomiseur à buses.

10. Procédé selon l'une des revendications 1 à 9, **caractérisé en ce que** la séparation comprend une filtration, un lavage puis un compactage, au moyen d'un filtre presse.

11. Procédé selon l'une des revendications 1 à 10, **caractérisé en ce que** le produit séché est ensuite broyé, puis éventuellement aggloméré.

12. Procédé selon l'une des revendications 1 à 11, **caractérisé en ce que** le produit séché est ensuite aggloméré.

**Patentansprüche**

1. Verfahren zur Herstellung von gefälltem Siliciumdioxid, das seinem Typen nach derart beschaffen ist, dass es die Umsetzung eines Silikats mit mindestens einer Säure umfasst, um auf diese Weise eine Suspension von gefälltem Siliciumdioxid zu erhalten, woraufhin diese Suspension einem Trennvorgang und einer Trocknung unterzogen wird, wobei:

   - die Fällung folgendermaßen durchgeführt wird:

      (i) es wird ein Ursprungsansatz gebildet, der mindestens einen Teil der Gesamtmenge des Silikats, welches für die Reaktion eingesetzt wird, und einen Elektrolyten aufweist, wobei die Konzentration an Silikat (ausgedrückt in $SiO_2$) in dem Ursprungsansatz im Bereich von 50 bis 70 g/L liegt,
      (ii) dem Ansatz wird eine Säure zugesetzt, bis das Reaktionsmilieu einen pH-Wert im Bereich von 7 bis 8,5 erreicht hat,
      (iii) dem Reaktionsmilieu werden Säure und, gegebenenfalls, gleichzeitig die verbleibende Menge an Silikat zugesetzt,
      (iv) dem Reaktionsmilieu wird eine Säure zugesetzt, bis das Reaktionsmilieu einen pH-Wert im Bereich von 4 bis 6 erreicht hat,

      - der Trennvorgang eine Filtration und einen Waschgang mit Hilfe eines Filters umfasst, welches mit einem Verdichtungsmittel ausgestattet ist,
      - eine Suspension, die vorzugsweise einen Trockensubstanzgehalt von höchstens 22 Massen-% aufweist, durch Sprühtrocknung getrocknet wird,

**EP 2 794 480 B1**

wobei es sich zumindest im Schritt (iii) dieses Verfahrens bei der verwendeten Säure um eine konzentrierte Säure handelt, die aus der Gruppe ausgewählt ist, welche von Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-%, Salzsäure mit einer Konzentration von mindestens 30 Massen-% gebildet wird, und wobei es sich im Schritt (ii) bei der Säure, welche verwendet wird, nachdem im Reaktionsmilieu der Gelpunkt erreicht wurde, um konzentrierte Säure handelt, die aus der Gruppe ausgewählt ist, welche von Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-%, Salzsäure mit einer Konzentration von mindestens 30 Massen-% gebildet wird.

2. Verfahren zur Herstellung gefällten Siliciumdioxids nach Anspruch 1, **dadurch gekennzeichnet, dass** in Schritt (iii) dem Reaktionsmilieu gleichzeitig eine Säure und ein Silikat zugesetzt werden.

3. Verfahren nach einem der Ansprüche 1 und 2, **dadurch gekennzeichnet, dass** es sich bei der Säure, welche in den Schritten (iii) und (iv) verwendet wird, um eine konzentrierte Säure handelt, die aus der Gruppe ausgewählt ist, welche von Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-%, Salzsäure mit einer Konzentration von mindestens 30 Massen-% gebildet wird.

4. Verfahren nach Anspruch 3, **dadurch gekennzeichnet, dass** es sich bei der Säure, welche im Schritt (ii) verwendet wird, um eine konzentrierte Säure handelt, die aus der Gruppe ausgewählt ist, welche von Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-%, Salzsäure mit einer Konzentration von mindestens 30 Massen-% gebildet wird.

5. Verfahren nach einem der Ansprüche 1 bis 4, **dadurch gekennzeichnet, dass** es sich bei der konzentrierten Säure um Schwefelsäure mit einer Konzentration von mindestens 80 Massen-%, vorzugsweise von mindestens 90 Massen-%, handelt.

6. Verfahren nach einem der Ansprüche 1 bis 5, **dadurch gekennzeichnet, dass** es sich bei der konzentrierten Säure um Schwefelsäure mit einer Konzentration im Bereich von 90 bis 98 Massen-% handelt.

7. Verfahren nach einem der Ansprüche 1 bis 6, **dadurch gekennzeichnet, dass** die Konzentration an Silikat (ausgedrückt als $SiO_2$) in dem Ansatz im Bereich von 50 bis 65 g/L liegt.

8. Verfahren nach einem der Ansprüche 1 bis 7, **dadurch gekennzeichnet, dass** es sich bei dem Elektrolyten um Natriumsulfat handelt, wobei dessen Konzentration im Ursprungsansatz im Bereich von 12 bis 20 g/L liegt.

9. Verfahren nach einem der Ansprüche 1 bis 8, **dadurch gekennzeichnet, dass** das Trocknen mittels eines Sprühtrockners mit Düsen erfolgt.

10. Verfahren nach einem der Ansprüche 1 bis 9, **dadurch gekennzeichnet, dass** der Trennvorgang eine Filtration, einen Waschgang und anschließend eine Verdichtung umfasst, mittels einer Filterpresse.

11. Verfahren nach einem der Ansprüche 1 bis 10, **dadurch gekennzeichnet, dass** das getrocknete Produkt anschließend zerkleinert und danach möglicherweise agglomeriert wird.

12. Verfahren nach einem der Ansprüche 1 bis 11, **dadurch gekennzeichnet, dass** das getrocknete Produkt anschließend agglomeriert wird.

**Claims**

1. Method for producing precipitated silica of the type comprising the reaction of a silicate with at least one acid, as a result of which a precipitated-silica suspension is obtained, then the separation and drying of this suspension, in which:

- the precipitation is carried out in the following way:

(i) an initial vessel heel, which comprises at least one portion of the total amount of the silicate involved in the reaction and an electrolyte, is formed, the silicate concentration (expressed as $SiO_2$) in said initial vessel heel being between 50 and 70 g/l,
(ii) an acid is added to said vessel heel until a pH value of the reaction medium of between 7 and 8.5 is obtained,
(iii) acid and, where appropriate, simultaneously the remaining amount of the silicate are added to the reaction medium,
(iv) an acid is added to the reaction medium, in particular until a pH value of the reaction medium of between 4 and 6 is obtained,

- the separation comprises filtration and washing by means of a filter equipped with a compacting means,
- a suspension, preferably having a solids content of at most 22% by weight, is spray-dried,

in which method, in at least step (iii), the acid used is a concentrated acid chosen from the group formed by sulfuric acid having a concentration of at least 80% by weight, in particular of at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight,
and in which, in step (ii), the acid used after the gel point has been reached in the reaction medium is a concentrated acid chosen from the group formed by sulfuric acid having a concentration of at least 80% by weight, in particular of at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

2. Method for producing precipitated silica according to Claim 1, **characterized in that**, in step (iii), an acid and a silicate are simultaneously added to the reaction medium.

3. Method according to either of Claims 1 and 2, **characterized in that** the acid used in steps (iii) and (iv) is a concentrated acid chosen from the group formed by sulfuric acid having a concentration of at least 80% by weight, in particular of at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

4. Method according to Claim 3, **characterized in that** the acid used in step (ii) is a concentrated acid chosen from the group formed by sulfuric acid having a concentration of at least 80% by weight, in particular of at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

5. Method according to one of Claims 1 to 4, **characterized in that** said concentrated acid is sulfuric acid having a concentration of at least 80% by weight, preferably of at least 90% by weight.

6. Method according to one of Claims 1 to 5, **characterized in that** said concentrated acid is sulfuric acid having a concentration of between 90 and 98% by weight.

7. Method according to one of Claims 1 to 6, **characterized in that** said silicate concentration (expressed as $SiO_2$) in said vessel heel is between 50 and 65 g/l.

8. Method according to one of Claims 1 to 7, **characterized in that** said electrolyte is sodium sulfate, the concentration thereof in the initial vessel heel being between 12 and 20 g/l.

9. Method according to one of Claims 1 to 8, **characterized in that** said drying is carried out by means of a nozzle atomizer.

10. Method according to one of Claims 1 to 9, **characterized in that** the separation comprises filtration, washing and then compacting, by means of a filter press.

11. Method according to one of Claims 1 to 10, **characterized in that** the dried product is then ground, then optionally agglomerated.

12. Method according to one of Claims 1 to 11, **characterized in that** the dried product is then agglomerated.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 520862 B1

- WO 2010022544 A1

**Littérature non-brevet citée dans la description**

- *The Journal of the American Chemical Society,* 1938, vol. 60, 309